# EUROPÄISCHE PATENTSCHRIFT

(11) **EP 1 877 287 B1**
(45) Veröffentlichungstag und Bekanntmachung des Hinweises auf die Patenterteilung: **07.06.2017**
(21) Anmeldenummer: 06742700.5
(22) Anmeldetag: 26.04.2006
(51) Int. Cl.: B60R 19/52, B60R 13/00

(54) **KÜHLERGRILLANORDNUNG ZUR ALTERNATIVEN VERWENDUNG**
RADIATOR GRILL ARRANGEMENT PERMITTING AN ALTERNATIVE USE
ENSEMBLE RADIATEUR-CALANDRE POUVANT ETRE UTILISE DE MANIERE ALTERNATIVE

(30) Priorität: 27.04.2005 DE 102005020411
(43) Veröffentlichungstag der Anmeldung: 16.01.2008
(73) Patentinhaber: Magna Exteriors (Germany) GmbH, 66280 Sulzbach (DE)
(72) Erfinder: FLOTZINGER, Franz, 73230 Kirchheim/Teck (DE); MOHR, Olaf, 61479 Glashütten (DE)
(74) Vertreter: Rausch, Gabriele
(86) Internationale Anmeldenummer: PCT/EP2006/003871
(87) Internationale Veröffentlichungsnummer: WO 2006/114298

(56) Entgegenhaltungen:
- DE-A1- 10 138 186
- DE-B3- 10 257 794
- PATENT ABSTRACTS OF JAPAN Bd. 1997, Nr. 11, 28. November 1997 (1997-11-28) & JP 09 193728 A (HATAKE KOICHIRO), 29. Juli 1997 (1997-07-29)
- PATENT ABSTRACTS OF JAPAN Bd. 2003, Nr. 12, 5. Dezember 2003 (2003-12-05) & JP 2004 306917 A (TOYODA GOSEI CO LTD), 4. November 2004 (2004-11-04)
- PATENT ABSTRACTS OF JAPAN Bd. 2003, Nr. 06, 3. Juni 2003 (2003-06-03) & JP 2003 048499 A (TOYOTA MOTOR KYUSHU INC), 18. Februar 2003 (2003-02-18)
- PATENT ABSTRACTS OF JAPAN Bd. 1999, Nr. 10, 31. August 1999 (1999-08-31) & JP 11 139227 A (HINO MOTORS LTD), 25. Mai 1999 (1999-05-25)
- PATENT ABSTRACTS OF JAPAN Bd. 016, Nr. 057 (M-1210), 13. Februar 1992 (1992-02-13) & JP 03 255207 A (TOYODA GOSEI CO LTD), 14. November 1991 (1991-11-14)

## Beschreibung

Die vorliegende Erfindung betrifft eine Kühlergrillanordnung zur alternativen Verwendung bei verschiedenen Kraftfahrzeugtypen sowie ein Verfahren zum Herstellen einer derartigen Kühlergrillanordnung.

### Hintergrund der Erfindung

Kühlergrillanordnungen, die an einem Frontstoßfänger eines Kraftfahrzeuges zu befestigen sind, werden durch Verkauf des Kraftfahrzeuges auf verschiedenen weltweiten Märkten mit unterschiedlichem Design ausgestattet. Dies betrifft insbesondere eine unterschiedliche Ausgestaltung von Emblemen und ggf. vorgesehenen Zierleisten, welche auf entsprechend angepaßten verschiedenen Kühlergrillgrundkörpern befestigt werden.

Das Bereitstellen verschiedener Kühlergrillgrundkörper für die Fertigung verschiedener Ausführungen mit unterschiedlichem Design ist kostenintensiv und darüber hinaus hinsichtlich der durchzuführenden Fertigung wenig flexibel.

Die JP 09193728 A1 beschreibt einen Kühlergrill mit entsprechend dem gewünschten Luftdurchsatz einzusetzenden Lamellen, Querstreben. Damit lässt sich insbesondere der saisonale gewünschte, benötigte Luftdurchsatz einstellen.

Einen Kühlergrill mit Fußgängerschutz beschreibt die JP2004306917 A1. Ein Designteil ist dem nachgiebig gestalteten Kühlergrill-Grundkörper vorgeschaltet. Die Nachgiebigkeit des Kühlergrill-Grundkörper wird durch entsprechende Materialauswahl realisiert. Das Designteil ist aus einem harten Kunststoff gefertigt.

Aus der JP 11 139227 A1 ist es bekannt, ein Emblem mittels Rastverbindern an einem Kühlergrill, einer Kühlergrillverkleidung zu fixieren. Die horizontal verlaufenden Streben sind als nachgiebige Profilteile gestaltet, auf die zugeordnete Rastnasen aufgesteckt werden.

Eine lösbare aber diebstahlsichere Firmenzeichenbefestigung zeigt die DE101 38 186 A1. Vorgesehen sind am Rand des Firmenzeichens angebrachte Clipsverbindungen, welche mit dem Rand einer das Firmenzeichen aufnehmenden Öffnung zusammenwirken.

Zur Befestigung eines Firmenemblems an einem Kühlergitter sind im Randbereich des Emblems Hakenelemente angeformt, die mit entsprechenden Aufnahmen im Kühlergrill zusammenwirken. Das Firmenemblem wird mit einer Drehbewegung eingesetzt. Eine derartige Befestigung zeigt die DE102 57 794 B3.

Zur Befestigung eines Kühlergrills in einer Aufnahme in einem Kraftfahrzeug zwischen Motorhaube und Stoßstange schlägt die JP03 255 207 A1 ein Distanzelement vor, mit dem die Oberkante des Grills an einer unterhalb der Haube befindlichen fahrzeugfesten Aufnahme fixiert wird.

Eine Kühlergrillanordnung, welche im Design einfach geändert werden kann, beschreibt die JP03 048 499 A1. In eine fahrzeugseitige Aufnahmeöffnung wird ein Luftdurchsatzgitter, ein Rahmen, ein Zierkörper, Querstreben sowie ein Emblem eingesetzt. Durch Austauschen der Teile ist das Design abänderbar.

Vor dem Hintergrund des Standes der Technik und der derzeitigen Vorgehensweise wäre es demnach wünschenswert, eine Kühlergrillanordnung vorzusehen, die eine Verwendung für verschiedene Ausführungen von Zierleisten und Emblemen bei verschiedenen Kraftfahrzeugtypen erlaubt.

### Zusammenfassung der Erfindung

Die vorliegende Erfindung schlägt demnach eine Kühlergrillanordnung mit einem an einem Kraftfahrzeug befestigbaren Kühlergrillgrundkörper, einem auf den Kühlergrillgrundkörper aufbringbaren Zierrahmen und einer auf dem Kühlergrillgrundkörper anordenbaren Luftzufuhrabdeckung vor, wobei die Kühlergrillanordnung zur Fertigung eines Kühlergrills eines beliebigen Kraftfahrzeugtyps aus einer vorgegebenen Gruppe verschiedener Kraftfahrzeugtypen verwendbar ist. Der Kühlergrillgrundkörper weist dabei Befestigungspunkte zur Befestigung einer mit korrespondierenden Befestigungspunkten ausgestatteten Zierleiste auf. Das bedeutet, dass erfindungsgemäß die einzelnen Elemente des Kühlergrills, wie der Kühlergrillgrundkörper, der darauf aufzubringende Zierrahmen und die darauf anordenbare Luftzufuhrabdeckung für alle in der Gruppe enthaltenen verschiedenen Kraftfahrzeugtypen einheitlich sind und alternativ zur Fertigung eines Kühlergrills für einen der Kraftfahrzeugtypen verwendet werden können. Die erfindungsgemäße Kühlergrillanordnung kann demnach ohne letztliche Spezifizierung auf einen Kraftfahrzeugtyp der Gruppe vorab gefertigt und bereitgestellt werden. Die Kühlergrillanordnung läßt sich als eine Art Baukasten zur Fertigung eines Kühlergrills für einen beliebigen Kraftfahrzeugtyp aus der Gruppe der Kraftfahrzeugtypen charakterisieren.

Die Gruppe der Kraftfahrzeugtypen kann dabei eine Gruppe von Kraftfahrzeugtypen sein, welche alle hinsichtlich ihrer Konstruktion übereinstimmen und nur durch Verkauf auf verschiedenen weltweiten Märkten mit einem unterschiedlichen Design ausgestattet werden müssen. Demnach können all diese Kraftfahrzeugtypen der Gruppe von ein und demselben Hersteller stammen, welcher die entsprechenden Kraftfahrzeuge unter Angabe verschiedener Marken auf den verschiedenen weltweiten Märkten vertreibt. Dabei ist es denkbar, dass sich die beim Vertrieb unterschiedlich erscheinenden Marken u.a. in einem unterschiedlichen Design eines entsprechenden Kühlergrills niederschlagen. Mittels der erfindungsgemäß vorgesehenen Kühlergrillanordnung ist es nunmehr möglich, Grundbausteine eines Kühlergrills für alle Kraftfahrzeugtypen der entsprechenden Gruppe einheitlich zu halten und nur ein oder wenige die Marke betreffende Bauteile zu variieren. Ein betroffenes Bauteil kann bspw. eine Zierleiste sein, die mit zu den vorgesehenen Befestigungspunkten des Kühlergrillgrundkörpers korrespondierenden Befestigungspunkten ausgestattet ist.

In einer möglichen Ausführungsform der erfindungsgemäßen Kühlergrillanordnung umfasst die Kühlergrillanordnung ferner mindestens eine mit einer Ausnehmung versehene und mit zu den Befestigungspunkten des Kühlergrillgrundkörpers korrespondierenden Befestigungspunkten ausgestattete Zierleiste, wobei die Ausnehmung der Zierleiste zur alternativen Aufnahme jeweils eines aus einer Gruppe unterschiedlicher Embleme geeignet ist. Ein Emblem ist dabei bspw. zur Identifizierung bzw. Charakterisierung einer entsprechenden Marke geeignet. Es ist denkbar, dass die Ausnehmung über einheitliche Befestigungselemente zur Befestigung der jeweiligen Embleme verfügt. Das bedeutet, dass ein in der Ausnehmung angeordnetes bzw. befestigtes Emblem austauschbar ist. Ferner ist es denkbar, dass die Kühlergrillanordnung über mehrere derartige Zierleisten verfügt, die jedoch alle einheitlich die gleichen zu den Befestigungspunkten des Kühlergrillgrundkörpers korrespondierenden Befestigungspunkte aufweisen. Bei dieser Ausführungsform wird quasi der bereits erwähnte "Baukasten" zur Fertigung eines Kühlergrills um mindestens einen "Baustein", nämlich in Form mindestens einer Zierleiste ergänzt bzw. erweitert.

In einer weiteren Ausführungsform der erfindungsgemäßen Kühlergrillanordnung weist der Kühlergrillgrundkörper einen unteren und einen oberen Rand auf, wobei an dem unteren Rand einheitliche Verbindungselemente zur Befestigung des Kühlergrillgrundkörpers an einem Stoßfänger wahlweise eines der Kraftfahrzeugtypen aus der Gruppe verschiedener Kraftfahrzeugtypen und an dem oberen Rand einheitliche Verbindungsbereiche zur Verbindung mit einem Vorbauelement wahlweise eines der Kraftfahrzeugtypen aus der Gruppe verschiedener Kraftfahrzeugtypen vorgesehen sind. Im einfachsten Falle unterscheiden sich die verschiedenen Kraftfahrzeugtypen der Gruppe lediglich hinsichtlich der Marke, unter welcher sie vertrieben werden, was sich wiederum im einfachsten Falle lediglich in einem unterschiedlich aussehenden Emblem oder einer unterschiedlichen Zierleiste niederschlägt. Es ist jedoch auch denkbar, dass eine erfindungsgemäße Kühlergrillanordnung einheitlich für verschiedene sich auch in anderen Konstruktionselementen unterscheidenden Kraftfahrzeugtypen verwendet werden kann.

Ferner ist es möglich, dass die erfindungsgemäß vorgesehene Kühlergrillanordnung Adapterbausteine bereitstellt, mit deren Hilfe jeweils ein Emblem aus der Gruppe unterschiedlicher Embleme in der Ausnehmung der Metalleiste aufgenommen werden kann. Bei einem derartigen Adapterbaustein kann es sich um eine Emblem-Abdeckung handeln, welche den Kühlergrill im Bereich des aufzubringenden Emblems abdecken kann und auf welche das Emblem von außen aufgebracht werden kann. Ein derartiger Adapterbaustein kann bspw. in der Ausnehmung hinter ein entsprechendes aufzunehmendes Emblem vormontiert werden. Es ist auch denkbar, dass ein Adapterbaustein für spezifische Embleme aus der Gruppe unterschiedlicher Embleme dazu geeignet ist, einen möglicherweise vorhandenen Größenunterschied hinsichtlich des Durchmessers der Ausnehmung und des des aufzunehmenden Emblems oder einen Formunterschied zwischen Ausnehmung und Emblem auszugleichen.

Die Luftzufuhrabdeckung, welche erfindungsgemäß für alle verschiedenen Kraftfahrzeugtypen der vorgegebenen Gruppe gleich ist, kann auf dem Kühlergrillgrundkörper aufgeklipst werden. Das bedeutet, dass die Luftzufuhrabdeckung über geeignete, ebenfalls für alle Kraftfahrzeugtypen einheitliche Klippsverbindungen verfügt, die entsprechend an dem Kühlergrillgrundkörper befestigt werden können. Der Zierrahmen, welcher erfindungsgemäß ebenfalls für alle Kraftfahrzeugtypen der Gruppe einheitlich ausgeführt ist, kann ebenfalls über geeignete Klippsverbindungen auf dem Kühlergrillgrundkörper aufgebracht werden. Die Zierleiste, die über die Ausnehmung zur Aufnahme eines Emblems eines der Kraftfahrzeugtypen verfügt, kann ebenfalls mittels Klippsverbindungen mit dem Kühlergrillgrundkörper verbunden werden.

Die Zierleiste kann ferner aus Metall wie bspw. Chrom oder einer geeigneten Metallegierung gefertigt sein. Es ist auch denkbar, die Zierleiste als eine mit einer Metallbeschichtung versehene Kunststoffleiste bereitzustellen. Zur Beschichtung kann neben einem Metall wie bspw. Chrom auch wiederum eine geeignete Metallegierung verwendet werden. Die Zierleiste kann galvanisch metallisiert, insbesondere verchromt sein.

In einer weiteren Ausführungsform der erfindungsgemäßen Kühlergrillanordnung ist der obere Rand des Kühlergrillgrundkörpers als eine nach oben abfallende flexible Leiste mit flexiblen Verbindungsabschnitten und einem flexiblen hinterschnittenen Bereich mit einem Faltenbalgeffekt ausgebildet. Dabei kann der flexible hinterschnittene Bereich des oberen Randes des Kühlergrillgrundkörpers in Form eines Wulstes bzw. einer Art Falte ausgebildet sein. Diese Wulst bzw. die Falte ist dabei bei einer potentiell auftretenden frontalen Belastung des eingebauten Kühlergrills derart ausgebildet, dass sie bei einer Bewegung des Kühlergrills in Richtung des Vorbauelementes, an welchem der Kühlergrill befestigt ist, zusammengepresst wird. Somit wird eine die Bruchdehnung insbesondere der metallbeschichteten Kunststoffteile überschreitende Verformung derselben vermieden.

Ferner ist es denkbar, dass ein verwendetes Metall für den Zierrahmen Chrom ist. Es ist jedoch auch denkbar, dass eine geeignete Metallegierung verwendet wird. Der Begriff Zierrahmen soll im Rahmen der Erfindung auch einen mit einem Metall oder einer Metallegierung beschichteten Rahmen, wie bspw. einen beschichteten Kunststoffrahmen umfassen.

Es ist möglich, dass der Kühlergrillgrundkörper aus einem Kunststoff, insbesondere aus ASA (Acrylnitril-Styrol-Acrylester), ABS (Acrylnitril-Butadien-Styrol) oder elastomermodifiziertes Polypropylen gefertigt ist. Der Kühlergrillgrundkörper kann dabei mittels eines Spritzgussverfahrens gefertigt sein.

In einer weiteren möglichen Ausführungsform der erfindungsgemäß vorgesehen Kühlergrillanordnung umfasst die Kühlergrillanordnung ferner die Gruppe der unterschiedlichen Embleme. Dadurch wird der "Baukasten" um weitere Bausteine, nämlich um die der Embleme ergänzt. Jedes Emblem aus der Gruppe kann dabei einer Wiedergabe einer entsprechenden Marke entsprechen, unter welcher ein entsprechender Kraftfahrzeugtyp auf einem bestimmten Markt vertrieben wird.

Die erfindungsgemäß vorgesehene Kühlergrillanordnung entspricht demnach einem "Baukastensortiment", dessen einzelne Bauteile zur Fertigung eines spezifischen Kühlergrills für einen Kraftfahrzeugtyp aus der vorgegebenen Gruppe der verschiedenen Kraftfahrzeugtypen entsprechend zusammengesetzt bzw. kombiniert werden können. Ein derart vorgesehener Bausatz macht den Zusammenbau bzw. die Fertigung eines Kühlergrills sehr einfach und kann zu Kosteneinsparungen führen, da unabhängig von dem letztlichen Aussehen des Kühlergrills, einige Bauteile einheitlich vorgefertigt werden können.

Die vorliegende Erfindung betrifft darüber hinaus ein Verfahren zur Bereitstellung einer Kühlergrillanordnung, insbesondere einer erfindungsgemäß vorgesehenen Kühlergrillanordnung, zur Verwendung bei Fertigung eines Kühlergrills eines Kraftfahrzeugs. Bei dem Verfahren werden ein einen unteren und einen oberen Rand aufweisender Kühlergrillgrundkörper, ein auf dem Kühlergrillgrundkörper aufbringbarer Zierrahmen und eine auf dem Kühlergrillgrundkörper anordenbare Luftzufuhrabdeckung derart gefertigt, dass die Kühlergrillanordnung zur Fertigung eines Kühlergrills eines beliebigen Kraftfahrzeugtyps aus einer vorgegebenen Gruppe verschiedener Kraftfahrzeugtypen verwendbar ist. Der Kühlergrillgrundkörper wird dabei mit Befestigungspunkten zur Befestigung einer mit korrespondierenden Befestigungspunkten ausgestatteten Zierleiste versehen.

In einer Ausführungsform des erfindungsgemäßen Verfahrens wird ferner eine mit einer Ausnehmung versehene auf dem Kühlergrillgrundkörper an den Befestigungspunkten aufbringbare Zierleiste bereitgestellt, wobei die Ausnehmung der Zierleiste zur alternativen Aufnahme jeweils eines aus einer Gruppe unterschiedlicher Embleme geeignet ist. Wie bereits erwähnt, kann ein Emblem zur Charakterisierung bzw. zur Unterscheidung eines Kraftfahrzeugtyps von anderen Kraftfahrzeugtypen geeignet sein. Es ist denkbar, dass die Gruppe der verschiedenen Kraftfahrzeugtypen alle Kraftfahrzeugtypen umfasst, deren Konstruktion gleich ist, und die nur aufgrund des Vertriebs auf unterschiedlichen Märkten unter jeweils einer anderen Marke auftreten. Demnach ist es mittels des erfindungsgemäßen Verfahrens möglich, einen im wesentlichen einheitlichen Kühlergrill für die Gruppe der unterschiedlichen Kraftfahrzeugtypen in Form eines Bausatzes bereitzustellen, und letztlich die Unterscheidung nur durch Aufbringen unterschiedlicher Embleme zu realisieren.

In einer weiteren Ausführungsform des erfindungsgemäßen Verfahrens werden an dem unteren Rand des Kühlergrillgrundkörpers einheitliche Verbindungselemente zur Befestigung des Kühlergrillgrundkörpers an einem Stoßfänger wahlweise eines der Kraftfahrzeugtypen aus der Gruppe verschiedener Kraftfahrzeugtypen und an dem oberen Rand des Kühlergrillgrundkörpers einheitliche Verbindungsbereiche zur Verbindung mit einem Vorbauelement wahlweise eines der Kraftfahrzeugtypen aus der Gruppe verschiedener Kraftfahrzeugtypen vorgesehen. Im einfachsten Falle handelt es sich, wie bereits erwähnt, bei der Gruppe verschiedener Kraftfahrzeugtypen um eine Gruppe von Kraftfahrzeugtypen, die sich lediglich hinsichtlich der Marke, unter welcher Sie auf den verschiedenen Märkten vertrieben werden, unterscheiden. Zur Kenntlichmachung der unterschiedlichen Marke genügt dabei bspw. ein unterschiedliches Emblem, welches in einer einheitlichen Ausnehmung der auf dem Kühlergrillgrundkörper aufbringbaren Zierleiste angeordnet wird.

Dabei ist es denkbar, dass zur jeweiligen Aufnahme eines Emblems aus der Gruppe unterschiedlicher Embleme entsprechende Adapterbausteine bereitgestellt werden, die in die Ausnehmung hinter das entsprechende Emblem vormontiert werden können. Ein Adapterbaustein kann dabei für ein spezifisches Emblem einen Größen- und/oder Formausgleich schaffen, um bspw. eine formschlüssige Aufnahme des Emblems in der Ausnehmung gewähren zu können.

Weiterhin ist es denkbar, dass der obere Rand des Kühlergrillgrundkörpers als eine nach oben abfallende flexible Leiste mit flexiblen Verbindungsabschnitten und einem flexiblen hinterschnittenen Bereich mit einem Faltenbalgeffekt ausgebildet wird.

Ferner ist es denkbar, dass bei dem erfindungsgemäßen Verfahren der Zierrahmen durch galvanische Metallisierung eines Kunststoffrahmens gefertigt wird. Es kann jedoch auch eine geeignete Metallegierung zum Einsatz kommen. Es ist denkbar, dass auch die Zierleiste einem mit einer Metallbeschichtung versehenen Bauteil entspricht. Eine Beschichtung mit einer geeigneten Metallegierung ist auch möglich. Sowohl bei dem Zierrahmen wie auch bei der Zierleiste kann es sich um galvanisch verchromte Kunststoffteile geeigneter Form handeln.

Der Kühlergrillgrundkörper kann aus einem Kunststoff, bspw. aus ASA, ABS oder Polypropylen gefertigt werden. Dabei ist es denkbar, den Kühlergrillgrundkörper mittels eines Spritzgussverfahrens herzustellen.

In einer weiteren möglichen Ausführungsform des erfindungsgemäßen Verfahrens, wird ferner die Gruppe der unterschiedlichen Embleme gefertigt und zur Zusammensetzung bereitgestellt.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen möglichen Kombinationen oder in Alleinstellung verwendbar sind, ohne den Rahmen der vorliegenden Erfindung zu verlassen.

### Kurzbeschreibung der Erfindung

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt eine mögliche Ausführungsform einer erfindungsgemäßen Kühlergrillanordnung, und
- Figur 2: zeigt eine weitere mögliche Ausführungsform einer erfindungsgemäßen Kühlergrillanordnung.

### Detaillierte Beschreibung der Erfindung

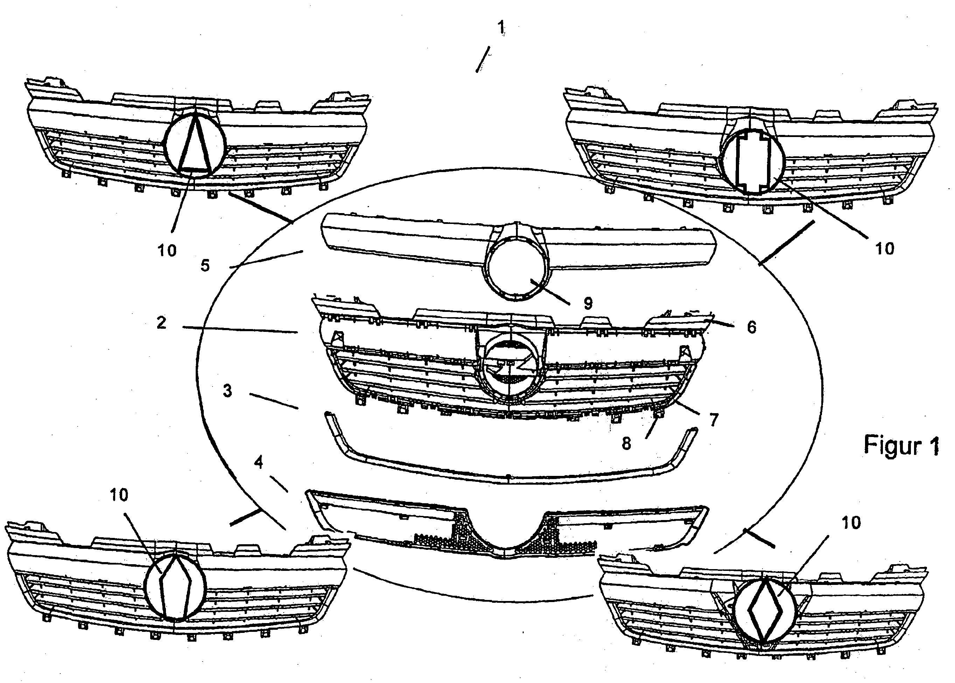

Figur 1 zeigt eine Kühlergrillanordnung 1, die einen Kühlergrillgrundkörper 2, einen Chromrahmen 3, eine Luftzufuhrabdeckung 4 und eine Chromleiste 5 umfasst. Der Kühlergrillgrundkörper 2 weist einen oberen Rand 6 und einen unteren Rand 7 auf. Der untere Rand 7 verfügt über eine Mehrzahl von gleichmäßig beabstandeten Verbindungselementen 8. Der obere Rand 6 ist als eine nach oben abfallende flexible Leiste mit flexiblen Verbindungsabschnitten und einem flexiblen hinterschnittenen Bereich mit einem Faltenbalgeffekt ausgebildet, was hier durch eine leichte Krümmung an beiden Seiten des oberen Randes 6 angedeutet ist. Der Kühlergrillgrundkörper 2 ist derart ausgestattet, dass er zur Fertigung eines Kühlergrills für verschiedene Kraftfahrzeugtypen einer vorgegebenen Gruppe von Kraftfahrzeugtypen einsetzbar ist. Der Chromrahmen 3 kann auf dem Kühlergrillgrundkörper 2 aufgebracht werden. Auch der Chromrahmen 3 ist für eine vorgegebene Gruppe verschiedener Kraftfahrzeugtypen einheitlich gefertigt, so dass er für einen Kühlergrill von verschiedenen Kraftfahrzeugtypen der Gruppe verwendbar ist. Der Chromrahmen 3 kann auch ein mit Chrom beschichteter Rahmen sein, wobei ein Grundrahmen aus bspw. Kunststoff, mit einem geeigneten Beschichtungsverfahren mit Chrom versehen wird. Es kann auch ein anderes Metall oder eine Metallbeschichtung verwendet werden. Es ist ebenfalls denkbar, hier eine Metallegierung vorzusehen. Die Luftzufuhrabdeckung 4 verfügt ebenfalls über geeignete Befestigungselemente, mit deren Hilfe sie auf den Kühlergrillgrundkörper 2 aufgebracht werden kann. Bei den Befestigungselementen kann es sich dabei um Klipps handeln, die auf den Kühlergrillgrundkörper 2 aufgeklipst werden oder formintegriert sind. Auch die Luftzufuhrabdeckung 4 ist so ausgestaltet, dass sie zur Fertigung jedes Kühlergrills für ein Kraftfahrzeugtyp aus der vorgegebenen Gruppe der Kraftfahrzeugtypen eingesetzt werden kann. Die ferner dargestellte Chromleiste 5 weist eine zentrale Ausnehmung 9 auf, die geeignet ist, um ein Emblem 10 aus einer Gruppe von Emblemen aufzunehmen. Zur Befestigung bzw. zur Aufnahme eines Emblems sind am Rande der Ausnehmung 9 umlaufend gleichmäßig angeordnete Öffnungen vorgesehen, in welchen an dem anzubringenden Emblem entsprechend angeordnete geeignete Klipps bzw. Haken einschnappen bzw. einhaken können. Jede andere geeignete Befestigungsmöglichkeit ist hier auch denkbar. In der hier dargestellten Chromleiste 5 ist die Ausnehmung 9 kreisförmig. Demnach ist sie insbesondere geeignet, um kreisförmige Embleme eines spezifischen der Ausnehmung 9 angepassten Durchmessers aufzunehmen. Die Chromleiste 5 ist demnach für alle Kraftfahrzeugtypen aus der Gruppe der Kraftfahrzeugtypen geeignet, die mittels eines kreisförmigen Emblems eines bestimmten Durchmessers gekennzeichnet werden. Für alle Embleme mit gleichen Durchmesser und lediglich verschiedenem Aussehen kann demnach die Chromleiste 5 einheitlich verwendet werden. Die Chromleiste 5 ist jedoch auch für andere als kreisförmige Embleme oder für kreisförmige Embleme mit kleinerem Durchmesser verwendbar, sofern ein jeweils geeigneter Adapterbaustein verwendet bzw. bereitgestellt wird. Mittels der hier dargestellten Kühlergrillanordnung 1 ist eine Art Baukastensystem gegeben, mit Hilfe dessen es möglich ist, einen Kühlergrill für eine bestimmte Gruppe verschiedener Kraftfahrzeugtypen mit Ausnahme der verschiedenen Embleme einheitlich herzustellen. Zur Unterscheidung der verschiedenen Kraftfahrzeugtypen ist es demnach nur noch nötig, in die Ausnehmung 9 die entsprechend unterschiedlichen Embleme einzufügen. In dem hier dargestellten Beispiel verfügen auch die Embleme über eine gleiche Form und unterscheiden sich lediglich in ihrem Design. Eine derart vorgesehene Baukastenform einer Kühlergrillanordnung 1 ermöglicht eine Kostenreduzierung und eine sehr flexible Anwendbarkeit für die Fertigung von Kühlergrills verschiedener Kraftfahrzeugtypen einer vorgegebenen Gruppe.

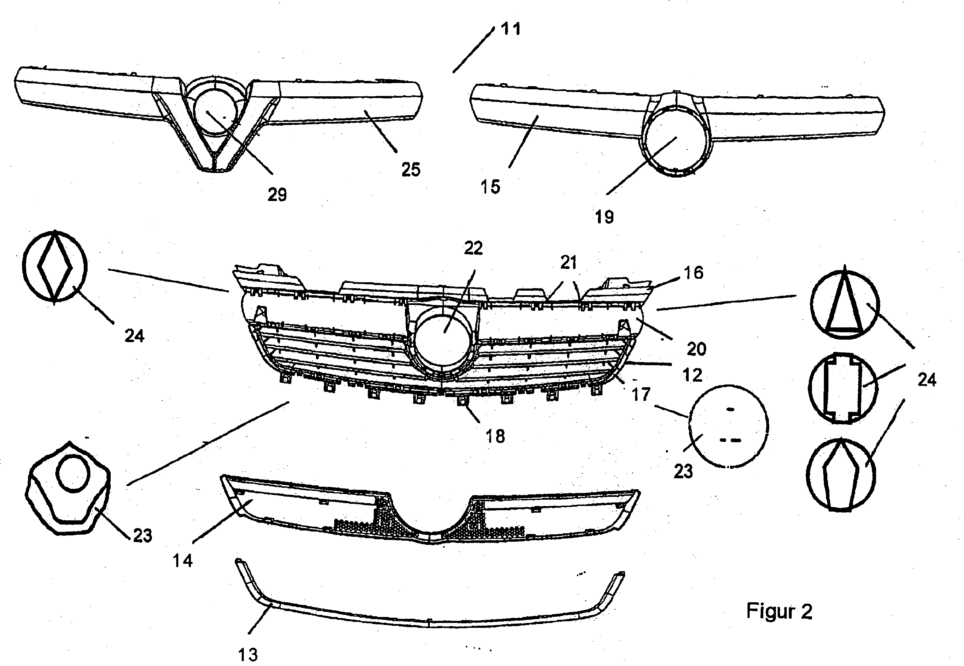

Figur 2 zeigt eine weitere Ausführungsform einer erfindungsgemäßen Kühlergrillanordnung 11. Die Kühlergrillanordnung 11 verfügt über einen Kühlergrillgrundkörper 12, einen Chromrahmen 13, eine Luftzufuhrabdeckung 14 und zwei Chromleisten 15 und 25. Die Chromleiste 15 weist eine Ausnehmung 19 und die Chromleiste 25 eine Ausnehmung 29 auf. Der Kühlergrillgrundkörper 12 weist einen oberen Rand 16 und einen unteren Rand 17 auf. Am unteren Rand 17 sind wiederum geeignete Verbindungselemente 18 in geeignetem Abstand angeordnet, mit welchem der Kühlergrillgrundkörper 12 an einem Stoßfänger eines Kraftfahrzeuges angebracht werden kann. Der Kühlergrillgrundkörper 12 verfügt darüber hinaus über Befestigungspunkte, an welchen der Chromrahmen 13 sowie die Luftzufuhrabdeckung 14 angebracht werden können. Ferner weist der Kühlergrillgrundkörper 12 im oberen Bereich 20 Befestigungspunkte 21 auf, an welchen die Chromleiste 15 oder die Chromleiste 25 angebracht werden kann. In einem Zentralbereich 22 des Kühlergrillgrundkörpers 12 ist ferner ein Bereich vorgesehen, über welchem, eine in der Chromleiste 15 bzw. 25 vorgesehene Ausnehmung 19 bzw. 29 nach Befestigung auf dem Kühlergrillgrundkörper 11 zu liegen kommt. Vor Aufbringen der Chromleiste 15 bzw. 25 kann auf dem Bereich 22 eine geeignete Abdeckung bzw. ein Adapterbaustein 23 aufgebracht werden. Die Abdeckung 23 deckt den Kühlergrillgrundkörper 12 im mittleren Bereich 22 ab und bietet ferner Befestigungsmöglichkeiten für ein in der Ausnehmung 19 bzw. 29 anzubringendes Emblem 24.

Der Kühlergrillgrundkörper 12 kann aus einem Kunststoff wie bspw. Polypropylen, ASA oder ABS gefertigt werden. Die Fertigung kann mittels eines Spritzgussverfahrens vorgenommen werden. Auf den Kühlergrillgrundkörper 12 kann nunmehr wahlweise die Chromleiste 15 oder die Chromleiste 25 aufgebracht werden, wobei die Chromleiste 15 und die Chromleiste 25 über gleiche Befestigungspunkte zum Kühlergrillgrundkörper 12 verfügen. Die Chromleiste 15 unterscheidet sich von der Chromleiste 25 lediglich in der Ausführung ihres zentralen Bereiches, insbesondere in der Größe der zur Aufnahme eines Emblems geeigneten Ausnehmung 19 bzw. 29. Ferner weist die Chromleiste 15 im Zentralbereich ein etwas anderes Design auf. Mittels der hier dargestellten Kühlergrillanordnung 11 mit all den genannten Elementen, lassen sich nunmehr Kühlergrills für verschiedene Kraftfahrzeugtypen fertigen, wobei sich die Unterschiedlichkeit der Kühlergrills lediglich in der unterschiedlichen Ausführungsform des Zentralbereichs der Chromleiste 15 von der der Chromleiste 25 und der entsprechend in die Ausnehmung 19 bzw. 29 einzufügenden Embleme manifestiert.

Der Kühlergrillgrundkörper 12, der Chromrahmen 13 sowie die Luftabfuhrabdeckung 14 sind jedoch einheitlich ausgebildet. Ferner sind die Befestigungspunkte der Chromleiste 15 und der Chromleiste 25 gleich ausgeführt, so dass sie auf ein und demselben Kühlergrillgrundkörper 12 befestigbar sind. Man hat demnach eine Art Baukasten mittels dessen man eine Mehrzahl von Kühlergrills mit verschiedenem Design konstruieren kann, wobei die Kühlergrills jeweils einem Kraftfahrzeugtyp aus einer vorgegebenen Gruppe von Kraftfahrzeugtypen zuordenbar sind.

## Patentansprüche

1. Kühlergrillanordnung als Baukasten zur Fertigung eines Kühlergrills, die einen an einem Kraftfahrzeug befestigbaren Kühlergrillgrundkörper (2, 12), einen Zierrahmen (3, 13) und eine Luftzufuhrabdeckung (4, 14) umfasst, wobei der Zierrahmen (3, 13) und die Luftzufuhrabdeckung (4, 14) auf dem Kühlergrillgrundkörper (2, 12) aufbringbar sind, wobei der Kühlergrillgrundkörper (2, 12) Befestigungspunkte zur Befestigung einer mit korrespondierenden Befestigungspunkten ausgestatteten Zierleiste aufweist, wobei die Kühlergrillanordnung (1, 11) zur Fertigung eines Kühlergrills eines beliebigen Kraftfahrzeugtyps aus einer vorgegebenen Gruppe verschiedener Kraftfahrzeugtypen verwendbar ist, wobei der Kühlergrillgrundkörper (2, 12) einen unteren (7, 17) und einen oberen (6, 16) Rand aufweist, wobei an dem unteren Rand (7, 17) einheitliche Verbindungselemente (8, 18) zur Befestigung des Kühlergrillgrundkörpers (2, 12). an einem Stossfänger wahlweise eines der Kraftfahrzeugtypen aus der Gruppe verschiedener Kraftfahrzeugtypen und an dem oberen Rand (6, 16) einheitliche Verbindungsbereiche zur Verbindung mit einem Vorbauelement wahlweise eines der Kraftfahrzeugtypen aus der Gruppe verschiedener Kraftfahrzeugtypen vorgesehen sind..

2. Kühlergrillanordnung nach Anspruch 1,
die ferner eine mit einer Ausnehmung (9, 19, 29) versehene auf dem Kühlergrillgrundkörper aufbringbare Zierleiste (5, 15, 25) umfasst, wobei die Ausnehmung (9, 19, 29) der Zierleiste (5, 15, 25) zur alternativen Aufnahme jeweils eines aus einer Gruppe unterschiedlicher Embleme (10, 24) geeignet ist.

3. Kühlergrillanordnung nach einem der Ansprüche 1 oder 2.
bei der ferner zur jeweiligen Aufnahme eines Emblems (10, 24) aus der Gruppe unterschiedlicher Embleme entsprechende Adapterbausteine (23) bereitgesellt werden.

4. Kühlergrillanordnung nach einem der vorhergehenden Ansprüche,
bei der der obere Rand (6, 16) des Kühlergrillgrundkörpers (2, 12) als eine nach oben abfallende flexible Leiste mit flexiblen Verbindungsabschnitten und einem flexiblen hinterschnittenen Bereich mit einem Faltenbalgeffekt ausgebildet ist.

5. Kühlergrillanordnung nach einem der vorhergehenden Ansprüche,
bei der die Zierleiste (5, 15, 25) eine metallisierte, insbesondere eine verchromte Kunststoffleiste ist.

6. Kühlergrillanordnung nach einem der vorhergehenden Ansprüche,
bei der der Kühlergrillgrundkörper (2, 12) aus einem Kunststoff, insbesondere aus ASA, ABS oder Polypropylen gefertigt ist.

7. Kühlergrillanordnung nach Anspruch 6,
bei der der Kühlergrillgrundkörper (2, 12) mittels eines Spritzgussverfahrens gefertigt ist.

8. Kühlergrillanordnung nach einem der Ansprüche 2 bis 8,
die ferner die Gruppe der unterschiedlichen Embleme (10, 24) umfasst.

9. Verfahren zur Bereitstellung einer Kühlergrillanordnung,
die einen an einem Kraftfahrzeug befestigbaren Kühlergrillgrundkörper (2, 12), einen Zierrahmen (3, 13) und eine Luftzufuhrabdeckung (4, 14) umfasst, als Baukasten zur Verwendung bei Fertigung eines Kühlergrills eines Kraftfahrzeugs, bei dem
der einen unteren und einen oberen Rand aufweisender Kühlergrillgrundkörper (2, 12) mit Befestigungspunkten zur Befestigung einer mit korrespondierenden Befestigungspunkten ausgestatteten Zierleiste (5, 15, 25),
der Zierrahmen (3, 13) auf dem Kühlergrillgrundkörper (2, 12) aufgebracht wird, und
die Luftzufuhrabdeckung (4, 14) auf dem Kühlergrillgrundkörper (2, 12) aufgebracht wird,
wobei die Kühlergrillanordnung (1, 11) zur Fertigung eines Kühlergrills eines beliebigen Kraftfahrzeugtyps aus einer vorgegebenen Gruppe verschiedener Kraftfahrzeugtypen verwendet wird,
und wobei an dem unteren Rand (7, 17) einheitliche Verbindungselemente (8, 18) zur Befestigung des Kühlergrillgrundkörpers (2, 12) an einem Stossfänger wahlweise eines der Kraftfahrzeugtypen aus der Gruppe verschiedener Kraftfahrzeugtypen und an dem oberen Rand (6, 16) einheitliche Verbindungsbereiche zur Verbindung mit einem Vorbauelement wahlweise eines der Kraftfahrzeugtypen aus der Gruppe verschiedener Kraftfahrzeugtypen vorgesehen werden.

10. Verfahren nach Anspruch 9,
bei dem ferner eine mit einer Ausnehmung (9, 19, 29) versehene auf dem Kühlergrillgrundkörper (2, 12) aufbringbare Zierleiste (5, 15, 25) bereitgestellt wird, wobei die Ausnehmung (9, 19, 29) der Zierleiste (5, 15, 25) zur alternativen Aufnahme jeweils eines aus einer Gruppe unterschiedlicher Embleme (10, 24) geeignet ist.

11. Verfahren nach Anspruch 10,
bei dem ferner zur jeweiligen Aufnahme eines Emblems (10, 24) aus der Gruppe unterschiedlicher Embleme entsprechende mit der Ausnehmung geeignet zusammenwirkende Adapterbausteine (23) bereitgestellt werden.

12. Verfahren nach einem der Ansprüche 9 bis 11,
bei dem der obere Rand (6, 16) des Kühlergrillgrundkörpers (2, 12) als eine nach oben abfallende flexible Leiste mit flexiblen Verbindungsabschnitten und einem flexiblen hinterschnittenen Bereich mit einem Faltenbalgeffekt ausgebildet wird

13. Verfahren nach einem der Ansprüche 9 bis 12,
bei dem als Zierleiste und/oder als Zierrahmen galvanisch metallisierte, insbesondere verchromte Kunststoffteile eingesetzt werden.

14. Verfahren nach einem der Ansprüche 9 bis 13,
bei dem der Kühlergrillgrundkörper (2, 12) aus einem Kunststoff, insbesondere aus ASA, ABS oder Polypropylen gefertigt wird.

15. Verfahren nach Anspruch 14,
bei dem der Kühlergrillgrundkörper (2, 12) mittels eines Spritzgussverfahrens gefertigt wird.

16. Verfahren nach einem der Ansprüche 10 bis 15,
bei dem ferner die Gruppe der unterschiedlichen Embleme gefertigt und bereitgestellt wird.

## Claims

1. Radiator grill arrangement as a construction kit for manufacturing a radiator grill, said radiator grill arrangement comprising a radiator grill main body (2, 12) which is fastenable to a motor vehicle, a decorative frame (3, 13) and an air supply covering (4, 14), wherein the decorative frame (3, 13) and the air supply covering (4, 14) are attachable to the radiator grill main body (2, 12), wherein the radiator grill main body (2, 12) has fastening points for the fastening of a decorative strip which is provided with corresponding fastening points, wherein the radiator grill arrangement (1, 11) is usable for manufacturing a radiator grill of any type of motor vehicle from a predetermined group of various types of motor vehicle, wherein the radiator grill main body (2, 12) has a lower edge (7, 17) and an upper edge (6, 16), wherein standard connecting elements (8, 18) are provided on the lower edge (7, 17) for fastening the radiator grill main body (2, 12) to a bumper optionally of one of the types of motor vehicle from the group of various types of motor vehicle, and standard connecting regions are provided on the upper edge (6, 16) for connection to a front-part element optionally of one of the types of motor vehicle from the group of various types of motor vehicle.

2. Radiator grill arrangement according to Claim 1, which furthermore comprises a decorative strip (5, 15, 25) which is provided with a recess (9, 19, 29) and is attachable on the radiator grill main body, wherein the recess (9, 19, 29) of the decorative strip (5, 15, 25) is suitable for the alternative receiving of in each case one emblem from a group of different emblems (10, 24).

3. Radiator grill arrangement according to either of Claims 1 and 2, in which corresponding adaptor units (23) are furthermore provided for the respective receiving of an emblem (10, 24) from the group of different emblems.

4. Radiator grill arrangement according to one of the preceding claims, in which the upper edge (6, 16) of the radiator grill main body (2, 12) is designed as an upwardly sloping flexible strip with flexible connecting portions and a flexible undercut region with a folding bellows effect.

5. Radiator grill arrangement according to one of the preceding claims, in which the decorative strip (5, 15, 25) is a metalized, in particular a chromium-plated, plastics strip.

6. Radiator grill arrangement according to one of the preceding claims, in which the radiator grill main body (2, 12) is manufactured from a plastic, in particular from ASA, ABS or polypropylene.

7. Radiator grill arrangement according to Claim 6, in which the radiator grill main body (2, 12) is manufactured by means of an injection-moulding process.

8. Radiator grill arrangement according to one of Claims 2 to 8, which furthermore comprises the group of the different emblems (10, 24).

9. Method for providing a radiator grill arrangement which comprises a radiator grill main body (2, 12) which is fastenable to a motor vehicle, a decorative frame (3, 13) and an air supply covering (4, 14), as a construction kit for use in the manufacturing of a radiator grill of a motor vehicle, in which method
the radiator grill main body (2, 12) having a lower edge and an upper edge with fastening points for fastening a decorative strip (5, 15, 25) which is provided with corresponding fastening points,
the decorative frame (3, 13) is attached on the radiator grill main body (2, 12), and
the air supply covering (4, 14) is attached on the radiator grill main body (2, 12),
wherein the radiator grill arrangement (1, 11) is used for manufacturing a radiator grill of any type of motor vehicle from a predetermined group of various types of motor vehicle,
and wherein standard connecting elements (8, 18) are provided on the lower edge (7, 17) for fastening the radiator grill main body (2, 12) to a bumper optionally of one of the types of motor vehicle from the group of various types of motor vehicle, and standard connecting regions are provided on the upper edge (6, 16) for connection to a front-part element optionally of one of the types of motor vehicle from the group of various types of motor vehicle.

10. Method according to Claim 9, in which furthermore a decorative strip (5, 15, 25) which is provided with a recess (9, 19, 29) and is attachable on the radiator grill main body (2, 12) is provided, wherein the recess (9, 19, 29) of the decorative strip (5, 15, 25) is suitable for the alternative receiving of in each case one emblem from a group of different emblems (10, 24).

11. Method according to Claim 10, in which furthermore corresponding adaptor units (23) interacting suitably with the recess are provided for the respective receiving of an emblem (10, 24) from the group of different emblems.

12. Method according to one of Claims 9 to 11, in which the upper edge (6, 16) of the radiator grill main body (2, 12) is designed as an upwardly sloping flexible strip with flexible connecting portions and a flexible undercut region with a folding bellows effect.

13. Method according to one of Claims 9 to 12, in which galvanically metalized, in particular chromium-plated, plastics parts are used as the decorative strip and/or as the decorative frame.

14. Method according to one of Claims 9 to 13, in which the radiator grill main body (2, 12) is manufactured from a plastic, in particular from ASA, ABS or polypropylene.

15. Method according to Claim 14, in which the radiator grill main body (2, 12) is manufactured by means of an injection-moulding process.

16. Method according to one of Claims 10 to 15, in which furthermore the group of the different emblems is manufactured and provided.

## Revendications

1. Agencement de grille de radiateur en tant que kit de construction pour la fabrication d'une grille de radiateur qui comprend un corps de base de grille de radiateur (2, 12) pouvant être fixé à un véhicule automobile, un cadre décoratif (3, 13) et un couvercle d'alimentation en air (4, 14), le cadre décoratif (3, 13) et le couvercle d'alimentation en air (4, 14) pouvant être montés sur le corps de base de grille de radiateur (2, 12), le corps de base de grille de radiateur (2, 12) présentant des points de fixation pour la fixation d'une baguette décorative munie de points de fixation correspondants, l'agencement de grille de radiateur (1, 11) pouvant être utilisé pour fabriquer une grille de radiateur d'un type de véhicule automobile quelconque à partir d'un groupe défini de types de véhicules automobiles différents, le corps de base de grille de radiateur (2, 12) présentant un bord inférieur (7, 17) et un bord supérieur (6, 16), des éléments de connexion unitaires (8, 18) pour la fixation du corps de base de grille de radiateur (2, 12) à un pare-chocs au choix d'un des types de véhicule automobile parmi le groupe de types de véhicules automobiles différents étant prévus au niveau du bord inférieur (7, 17) et des régions de connexion unitaires pour la connexion à un élément de la partie avant au choix d'un des types de véhicule automobile parmi le groupe de types de véhicules automobiles différents étant prévues au niveau du bord supérieur (6, 16).

2. Agencement de grille de radiateur selon la revendication 1, comprenant en outre une baguette décorative (5, 15, 25) pourvue d'un évidement (9, 19, 29) pouvant être monté sur le corps de base de grille de radiateur, l'évidement (9, 19, 29) de la baguette décorative (5, 15, 25) étant apte à recevoir, de manière sélective, à chaque fois l'un parmi un groupe d'emblèmes différents (10, 24).

3. Agencement de grille de radiateur selon l'une quelconque des revendications 1 ou 2, dans lequel en outre des modules d'adaptateur (23) correspondants sont prévus pour la réception dans chaque cas d'un emblème (10, 24) parmi le groupe d'emblèmes différents.

4. Agencement de grille de radiateur selon l'une quelconque des revendications précédentes, dans lequel le bord supérieur (6, 16) du corps de base de grille de radiateur (2, 12) est réalisé sous la forme d'une baguette flexible diminuant vers le haut avec des portions de connexion flexibles et une région flexible en contre-dépouille avec un effet de soufflet.

5. Agencement de grille de radiateur selon l'une quelconque des revendications précédentes, dans lequel la baguette décorative (5, 15, 25) est une baguette en plastique métallisée, en particulier chromée.

6. Agencement de grille de radiateur selon l'une quelconque des revendications précédentes, dans lequel le corps de base de grille de radiateur (2, 12) est fabriqué en plastique, en particulier en ASA, en ABS ou en polypropylène.

7. Agencement de grille de radiateur selon la revendication 6, dans lequel le corps de base de grille de radiateur (2, 12) est fabriqué au moyen d'un procédé de moulage par injection.

8. Agencement de grille de radiateur selon l'une quelconque des revendications 2 à 8, comprenant en outre le groupe des emblèmes différents (10, 24).

9. Procédé pour fournir un agencement de grille de radiateur qui comprend un corps de base de grille de radiateur (2, 12) pouvant être fixé à un véhicule automobile, un cadre décoratif (3, 13) et un couvercle d'alimentation en air (4, 14), en tant que kit de construction pour l'utilisation lors de la fabrication d'une grille de radiateur d'un véhicule automobile, dans lequel
le corps de base de grille de radiateur (2, 12) présentant un bord inférieur et un bord supérieur avec des points de fixation pour la fixation d'une baguette décorative (5, 15, 25) munie de points de fixation correspondants,
le cadre décoratif (3, 13) est appliqué sur le corps de base de grille de radiateur (2, 12) et
le recouvrement d'alimentation en air (4, 14) est appliqué sur le corps de base de grille de radiateur (2, 12),
l'agencement de grille de radiateur (1, 11) étant utilisé pour la fabrication d'une grille de radiateur d'un type de véhicule automobile quelconque à partir d'un groupe prédéfini de différents types de véhicules automobiles,
et des éléments de connexion unitaires (8, 18) pour la fixation du corps de base de grille de radiateur (2, 12) à un pare-chocs au choix d'un des types de véhicule automobile parmi le groupe de types de véhicules automobiles différents étant prévus au niveau du bord inférieur (7, 17) et des régions de connexion unitaires pour la connexion à un élément de la partie avant au choix d'un des types de véhicule automobile parmi le groupe de types de véhicules automobiles différents étant prévues au niveau du bord supérieur (6, 16).

10. Procédé selon la revendication 9, dans lequel en outre une baguette décorative (5, 15, 25) pourvue d'un évidement (9, 19, 29) et pouvant être appliquée sur le corps de base de grille de radiateur (2, 12) est fournie, l'évidement (9, 19, 29) de la baguette décorative (5, 15, 25) étant apte à recevoir, de manière sélective, à chaque fois l'un parmi un groupe d'emblèmes différents (10, 24).

11. Procédé selon la revendication 10, dans lequel en outre des modules d'adaptateur (23) correspondants, coopérant de manière appropriée avec l'évidement, sont prévus pour la réception dans chaque cas d'un emblème (10, 24) parmi le groupe d'emblèmes différents.

12. Procédé selon l'une quelconque des revendications 9 à 11, dans lequel le bord supérieur (6, 16) du corps de base de grille de radiateur (2, 12) est réalisé sous forme de baguette flexible diminuant vers le haut avec des portions de connexion flexibles et une région flexible en contre-dépouille avec un effet de soufflet.

13. Procédé selon l'une quelconque des revendications 9 à 12, dans lequel des pièces en plastique à revêtement de métal galvanisé, en particulier chromées, sont utilisées en tant que baguette décorative et/ou en tant que cadre décoratif.

14. Procédé selon l'une quelconque des revendications 9 à 13, dans lequel le corps de base de grille de radiateur (2, 12) est fabriqué en plastique, en particulier en ASA, en ABS ou en polypropylène.

15. Procédé selon la revendication 14, dans lequel le corps de base de grille de radiateur (2, 12) est fabriqué par un procédé de moulage par injection.

16. Procédé selon l'une quelconque des revendications 10 à 15, dans lequel en outre le groupe des emblèmes différents est fabriqué et fourni.
